# EUROPEAN PATENT APPLICATION

(11) **EP 4 497 321 A1**
(43) Date of publication of application: **29.01.2025**
(21) Application number: 24183536.2
(22) Date of filing: 20.06.2024
(51) Int. Cl.: A01F 15/07

(54) **BALE WRAPPER**

(30) Priority: 28.07.2023 GB 202311685
(71) Applicant: Kuhn-Geldrop B.V., 5667 KP Geldrop (NL)
(72) Inventor: VAN GOG, Johannes Antonius Martinus, 6027 RT SOERENDONK (NL); KWINTEN, Mattheus Louisa Johannes, 5571 LZ BERGEIJK (NL); TENBULT, Henricus Theodorus Hubertus, 5531 KL BLADEL (NL)
(74) Representative: Murgitroyd & Company

(57) **Abstract**

There is provided a bale wrapper (1) that applies a stretch film (123) wrapping to an agricultural bale (3). The present invention also relates to an agricultural bale (3) wrapping method. There is further provided a combination baler/bale wrapper and combination baling/bale wrapping method. In one example, there is provided a mobile agricultural bale wrapper (1) comprising:

a bale support (10), comprising first and second support elements (101, 102), for supporting a bale (3) and rotating the bale (3) about a first axis (X);

and a film dispenser holder (11) for holding and rotating a film dispenser (12), the film dispenser (12) comprising a film holder (121) for holding a roll (122) of stretch film (123), to dispense the film (123) when the film dispenser (12) is rotated, the film dispenser holder (11) being configured to provide relative rotation between the bale support (10) and the film dispenser (12) about a second axis that extends substantially perpendicular to the first axis so that the stretch film (123) applied to the bale (3) forms a bale (3) wrapping that substantially completely covers the bale (3);

wherein the first support element (101) is a receiving support element, located on a receiving side of the bale support (10), and comprises first and second receiving support rollers (101A, 101B) positioned in tandem to receive and guide the bale (3) into a position for wrapping, and the second support element (102) is an unloading support element, located on an unloading side of the bale support (10), and comprises at least one first unloading support roller (102A).

## Description

The present invention relates to a bale wrapper that applies a stretch film wrapping to an agricultural bale. The present invention also relates to an agricultural bale wrapping method.

The agricultural bale may for example be cylindrical, which may be called a "round" bale. Such a bale typically has outer surfaces including a cylindrical surface, extending around the circumference of the bale, and substantially round end faces at either end of the cylindrical surface, thus forming a cylinder bale shape.

The invention further relates to a combination baler/bale wrapper and combination baling/bale wrapping method.

Bale wrappers *per se* are well known to those of ordinary skill in the art, and therefore will not be described in detail herein. In general terms only, a bale wrapper has a bale support for supporting a, for example, round bale with its longitudinal axis extending generally parallel to the ground, and which may operate to rotate the, for example, round bale generally about its axis (a first axis) while relative rotation takes place between a film dispenser reel and the bale support about a second axis which extends substantially perpendicular to the first axis during a wrapping cycle.

A bale wrapper apparatus may be an independently operated machine, carrying out wrapping of a bale only, or it may be incorporated in a combined or integrated apparatus (combination baler/bale wrapper) which is able to carry out bale-formation and bale wrapping in a single apparatus.

A stretch film wrapping may be applied to an agricultural bale in order to protect the contents of the bale from the weather and, in the case of silage crops, to form a substantially airtight and watertight enclosure within which the crop can mature or ferment to form silage.

The stretch film wrapping may be applied to the bale in different orientations. For example, the film may be applied to the bale in a horizontal orientation, or it could be applied to the bale in a vertical orientation, or it could be applied to the bale in an orientation inclined to the horizontal and/or vertical orientation.

A pre-stretcher unit may be provided in the path of travel of a length or strip of film as it is withdrawn from a dispenser reel to be applied as overlapping pre-stretched windings to envelope the bale during the wrapping cycle.

The pre-stretcher may comprise two spaced-apart rollers around which the film passes, which rotate at different circumferential speeds (stretch ratio) to stretch the film. The film strip is withdrawn from the dispenser reel, and passed through the pre-stretcher unit, under the action of a so-called "application force" generated by the relative rotation about the second axis, and rotation of the bale about its axis by the bale support. The pre-stretcher, for example, may alternatively be powered/driven in order to control rotation of the pre-stretcher, for example to reduce the application force.

Passage of the film strip through the pre-stretcher unit causes elongation of the film prior to application of the film strip as successive overlapping windings on the bale. The pre-stretched or elongated film subsequently tightens itself onto the outer surface of the bale under the action of the elastic energy stored in the pre-stretched film. In this way, successive layers of coverage of film are applied to the bale.

Increasing the stretch ratio provides certain benefits. In particular, the greater the stretch ratio, the more elongation of the film, the thinner the film, so the more economical the use of film. Also, the greater the stretch ratio, the higher the application force, the more tightly the strip is applied to the bale, so the better the air tightness of the bale.

In order to achieve improved wrapping of the bale, it is desirable to provide a way of supporting the bale, during wrapping, that improves stability and resists any lateral forces that may be applied to the bale. Higher application force of the film may for example lead to higher lateral forces on the bale which results in a higher chance of the bale being pulled off the bale support, which leads to severe disruptions in the wrapping process.

A mobile bale wrapper where the film is applied in a vertical or inclined to the vertical orientation and comprising a bale support containing two bale support elements comprising one bale support roller each, may not always be suitable to accommodate for the above-mentioned lateral forces and/or for accommodating smaller bales. Typically, the bale support elements may have an intermediate distance of approx. 750-850mm to create a 'wrapper cradle' for the bale to be wrapped. Bales with diameter of 750-850mm or less may not stay on this bale support, as, because of the orientation of the stretch film application, no further elements may be present between the bale support elements to support the bale. Typically, the last bale from the field may not be a complete bale, as no further material is available on the field, and could have a diameter of less than the intermediate distance between the bale support elements. Also, this last bale may have a lower density as it is not fully compressed in the chamber. Such a bale with lower density may be kneaded by and between the bale support rollers instead of being rotated on the bale support when wrapping the bale with film, as the bale support surface formed by the bale support rollers is not sufficient for preventing kneading of a bale with lower density. A solution for the smaller bale size could be to decrease the typical distance of 750-800mm between the bale support elements. However, these smaller bales having lower density may also be lighter in weight compared to a full size and fully compressed bale and are thus easier to pull off the bale support under influence of, for example, a lateral force, like the application force. A decreased intermediate distance compared to said distance of 750-850mm may in this case also decrease the stability of the small and less dense bale on the bale support. The problem of the kneading of these bales with lower density may also not be solved by decreasing the typical distance of 750-800mm between the bale support elements, as the support surface of the bale support formed by the two bale support rollers is still not sufficient to prevent this kneading of the bale. When kneading is occurring, the bale is not correctly rotated around its first axis, resulting in poorly wrapped bales or resulting in the bale getting stuck in the bale support (between the bale support elements) leading to severe disruptions (e.g. blockage of crop material in the wrapper) in the work sequence which takes a lot of valuable time and effort to solve; time which is taken from the capacity (wrapped bales per hour) of the bale wrapper.

Furthermore, especially mis-formed or odd-shaped bales or even normal-formed or -shaped bales may deviate from the intended direction of movement when loaded or transferred towards the bale support. This may, for example, occur when the bale wrapper is positioned on an inclined field, where the bales are loaded or transferred towards the bale support in a direction substantially perpendicular to the inclination of the field. For mis-formed or odd-shaped bales, deviation during loading or transferring towards the bale support can occur even with the bale wrapper in a flat, non-inclined field. When bales deviate from the intended direction upon loading or transferring, there is a risk the bale is not positioned correctly onto the bale support for wrapping the bale. This can result in that the bale is again not correctly rotated around its first axis, resulting in poorly wrapped bales or resulting in the bale getting stuck in the bale support leading to severe disruptions (e.g. blockage of crop material in the wrapper) in the work sequence which again takes a lot of valuable time and effort to solve.

Improved stability and guidance during loading/transfer and wrapping, and less chance of falling through or kneading during wrapping is desired for wrapping these smaller and/or less compressed (lower density) and/or mis-formed or odd-shaped bales with stretch film.

Embodiments of the invention will now be described, by way of example only, with reference to the accompanying drawings, in which:
Figure 1 is a simplified side view of a bale wrapper, in use, when connected to a tractor;
Figure 2 is a representation of the principle of wrapping a round bale using two perpendicular axes;
Figure 3 is a simplified side view showing relative positions of the film and bale support rollers when wrapping;
Figure 4a is a simplified side view of the bale wrapper, showing a round bale to be picked up from the ground;
Figure 4b is a simplified side view of the bale wrapper, showing the bale being loaded from the ground towards the bale support;
Figure 4c is a simplified side view of the bale wrapper, showing the bale being moved by a first support element;
Figure 4d is a simplified side view of the bale wrapper, showing the bale being supported in the bale support;
Figure 5 is a simplified side view of the position of the bale support rollers when a bale is supported by the bale support;
Figure 6 is a simplified side view of a first support element;
Figure 7 is a simplified perspective view of the bale being supported in the bale support;
Figure 8 is a simplified side view of the position of the bale support rollers when a bale is supported by the bale support, according to a further example;
Figure 9 is a simplified perspective view of example rollers;
Figure 10 is a simplified side view of a combined baler/bale wrapper, showing a second round bale being formed and supporting a first round bale on the bale support;
Figures 11a to 11g are simplified side views of a combined baler/bale wrapper and show steps involved in transferring a bale from a bale forming chamber to the bale support;
Figure 12 is a flowchart relating to a method for agricultural bale wrapping; and
Figure 13 is a flowchart relating to a method for agricultural baling/bale wrapping combination.

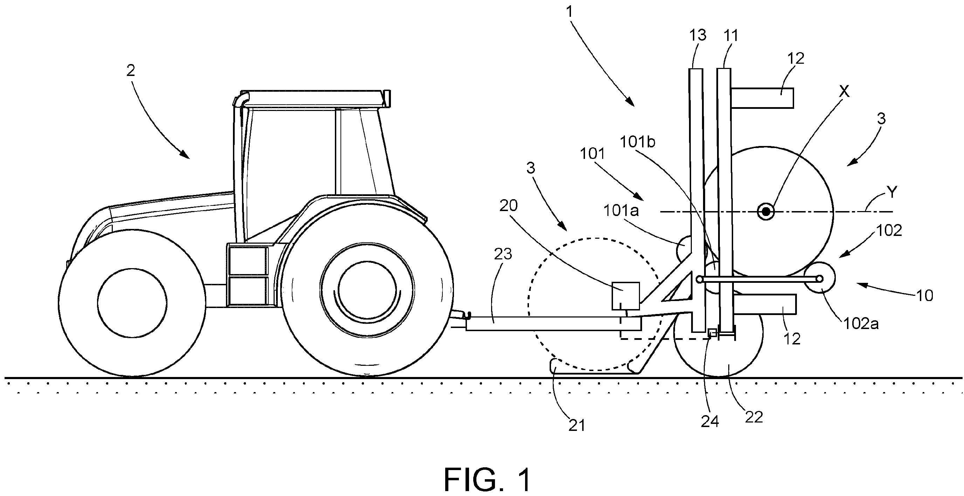

Figure 1 discloses a mobile agricultural bale wrapper 1, when connected to a tractor 2, and onto which a round bale 3 has been loaded from the ground (shown in dashed lines) to a wrapping position. The mobile agricultural bale wrapper 1 may comprise a bale support 10 for supporting the bale 3 and rotating the bale 3 about a first axis, X. The first axis in figure 1 may for example extend into the page. The bale support 10 may comprise first and second support elements 101, 102.

The mobile agricultural bale wrapper 1 may further comprise a film dispenser holder 11 for holding and rotating a film dispenser 12. The film dispenser 12 may comprise a film holder 121 for holding a roll 122 of stretch film 123, to dispense the film 123 when the film dispenser 12 is rotated, the film dispenser holder 11 being configured to provide relative rotation between the bale support 10 and the film dispenser 12 about a second axis, Y, that extends substantially perpendicular to the first axis, X, so that the stretch film 123 applied to the bale 3 forms a bale wrapping that substantially completely covers the bale 3. With the Y-axis in a horizontal orientation, the mobile agricultural wrapper 1 of figure 1 applies a strip of stretch film 123 to the bale 3 in a vertical orientation.

Further, a first support element 101 may be a receiving support element and may be located on a receiving side of the bale support 10. The bale wrapper 1 may further comprise loading means such as a loading arm 21 for lifting and holding a bale 3, to load the bale 3 onto the bale support 10. In this context, the receiving side of the bale support 10 is a side proximate loading means such as a loading arm 21. This may for example be on the front or leading side, based on the normal direction of travel of the bale wrapper when towed behind a tractor or otherwise driven. The first support element 101 may comprise first and second receiving support rollers 101a, 101b positioned in tandem to receive and guide the bale 3 into a position for wrapping. The position for wrapping may be referred to as a wrapping position, a bale wrapping position or a position of the bale 3 when supported by the bale support 10. The first and second receiving support rollers 101a, 101b are positioned adjacent to each other so as to form a path on which the bale 3 may smoothly transition from the loading arm 21 to the bale support 10. In some examples, the path may slope downwards to allow the bale 3 to roll under its own weight due to gravity.

The receiving side, on which the first support element 101 is located, may be referred to as a loading side or bale loading side, and may be towards the front of the bale wrapper 1, relative to the bale support 10, in the normal direction of travel (forwards being towards the left in figure 1). The unloading side may be referred to as the depositing side, which will be towards the back of the bale wrapper 1, relative to the bale support 10.

The second support element 102 may be an unloading support element and may be located on an unloading side of the bale support 10. The second support element 102 may comprise at least one first unloading support roller 102a. The second support element 102 may provide support for the bale 3 during wrapping and may then be moved to allow the bale 3 to be unloaded. Unloading may be performed by moving the bale 3, from the wrapping position on the bale support 10, over the at least one first unloading support roller 102a, and onto, for example, the ground. This may be achieved by moving the at least one first unloading support roller 102a downwards, to allow the bale 3 to roll off the bale support 10 more easily.

The bale support 10 may be referred to as a table, a wrapping table or a means for supporting the bale 3 for wrapping. The first support element 101 may for example be fixed to or part of the structural frame of the bale wrapper 1.

Providing the first and second receiving support rollers 101a, 101b, positioned in tandem, may reduce the likelihood of kneading of a bale 3, in particular if the bale 3 is of lower density or smaller than a desired size, as the bale support 10 then includes more support for the bale 3, leading to improved stability and greater distribution of any load or force applied to the bale 3.

Figure 1 shows further example features of a mobile agricultural bale wrapper 1. The film dispenser holder 11 may for example be a ring-shape and may rotate around the bale 3 when supported by the bale support 10. The film dispenser holder 11 may for example be a rotational wrapper ring, for example positioned to apply a film strip to the bale 3 in a vertical orientation or an orientation inclined to the vertical.

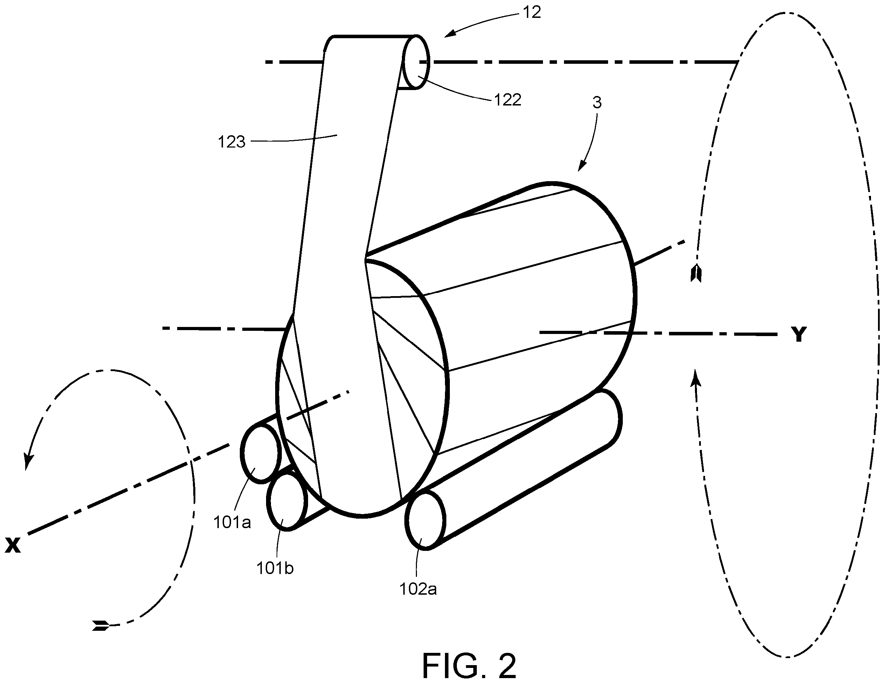

Figure 2 shows an example of how the round bale 3 may be rotated about its longitudinal axis X (the first axis). The figure further shows an example of how the film dispenser 12 may rotate around the bale 3 about a second axis, Y. In this way, the bale 3 may be wrapped with stretch film 123 in partially overlapping layers deposited onto the bale 3, as the bale 3 is rotated about its axis, X. Further, the film dispenser holder 11 may provide relative rotation between the bale support 10 and the film dispenser 12, about a second axis, Y. The second axis, Y, may extend substantially perpendicular to the first axis, X, so that the film 123 applied to the bale 3 forms a bale wrapping that covers a side surface and end faces of the bale 3, as shown in figure 2, for example. In some examples, the second axis, Y, may be substantially horizontal such that the film dispenser 12 rotates about a horizontal axis. In other examples, the second axis, Y, may be inclined to the horizontal, if the film dispenser holder 11 has an inclined configuration, for example to make the overall bale wrapper 1 more compact.

The film dispenser holder 11 may in some examples comprise two or more film dispensers 12, which may wrap the bale 3 concurrently in order to improve the efficiency of the wrapping.

As further shown in figure 1, the mobile agricultural bale wrapper 1 may further comprise a control unit 20 for controlling movement of the bale support 10 and/or the film dispenser holder 11. The bale wrapper 1 may further comprise wheels 22 to support movement of the bale wrapper 1 when towed behind a tractor 2, for example. The wheels 22 may be positioned, and may have a desired size, to provide sufficient ground clearance to allow the bale wrapper 1 to pass over bumps or undulations in a field. The bale wrapper 1 may further comprise a drawbar 23 to connect to the tractor 2, so that the bale wrapper 1 may be towed behind the tractor 2. In some examples, the film dispenser holder 11 may be driven by a drive motor 24.

In some examples, the bale wrapper 1 is mobile and may be self-propelled or can be towed by a tractor 2 as shown in figure 1, for driving on public roads and during operation in the field. In the field the bale wrapper 1 may drive or be towed towards bales 3 that are deposited in the field by a baler. A bale 3 may typically be 100cm to 150cm in diameter and 120cm in width, for a round bale. However, other sizes are envisaged.

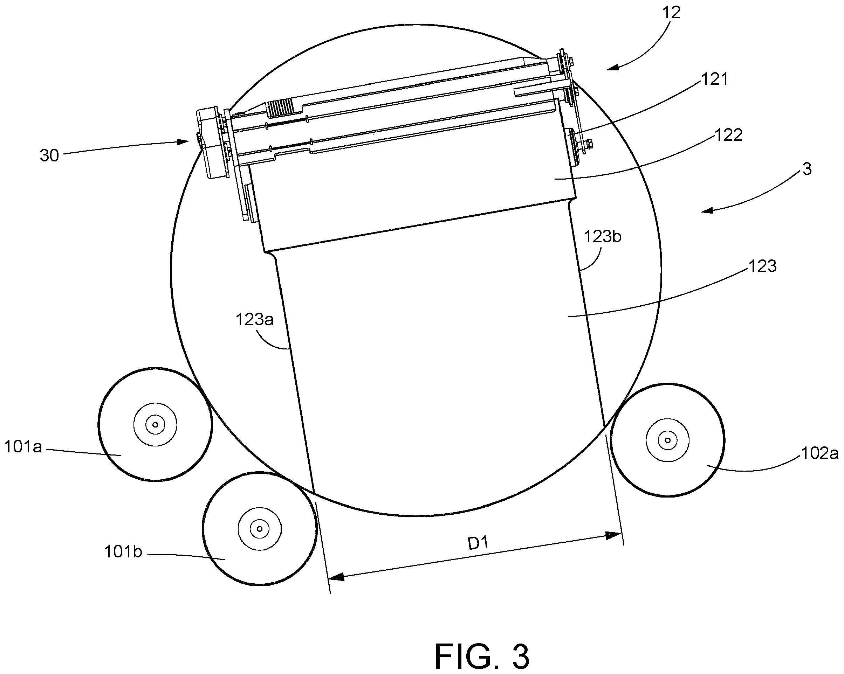

Figure 3 shows an example of how film 123 may be applied to a bale 3. As mentioned above in relation to figure 1, but shown in more detail film dispenser 12 may comprise a film holder 121 for holding a roll 122 of stretch film 123, to dispense the film 123 when the film dispenser 12 is rotated, the film dispenser holder 11 being configured to provide relative rotation between the bale support 10 and the film dispenser 12 about a second axis, Y, that extends substantially perpendicular to the first axis, X, so that the stretch film 123 applied to the bale 3 forms a bale wrapping that substantially completely covers the bale 3.

As shown in figure 3, the film dispenser 12 may further comprise a film pre-stretcher unit 30 that is configured to pre-stretch the film 123 by an elongation amount and apply the pre-stretched film 123 to the bale 3. The film pre-stretcher unit 30 may comprise a drive unit (not shown) to control rotation of the film pre-stretcher unit 30.

In an example, the mobile agricultural bale wrapper 1 may further comprise at least one film pre-stretcher unit 30 configured to pre-stretch the film 123 by an elongation amount and apply the pre-stretched film 123 to the bale 3. In an example, the distance, D1, between the second receiving support roller 101b and the first unloading support roller 102a may be equal to or greater than a width of the pre-stretched film 123. Figure 3 shows an example of this arrangement. In such an arrangement, the distance, D1, between the second receiving support roller 101b and the first unloading support roller 102a may be smaller than the width of the non-pre-stretched film 123. That is to say, when the film 123 is pre-stretched, it undergoes necking, where the width of the film 123 is reduced as the length is increased, i.e. the film 123 is stretched. This reduction in width may be predictable such that the rollers 101b, 102a may be positioned appropriately to provide support to the bale 3 without interfering with the wrapping of the bale 3. The distance D1 may also be small enough to accommodate and stably support smaller bales 3.

The mobile agricultural bale wrapper 1 may further comprise a power transfer ring 13, substantially adjacent to the rotational wrapper ring 11, to transfer power to a drive unit of the film pre-stretcher unit. The power transfer ring 13 may be used to transfer the power needed to, for example, reach higher elongation ratios of the stretch film 123.

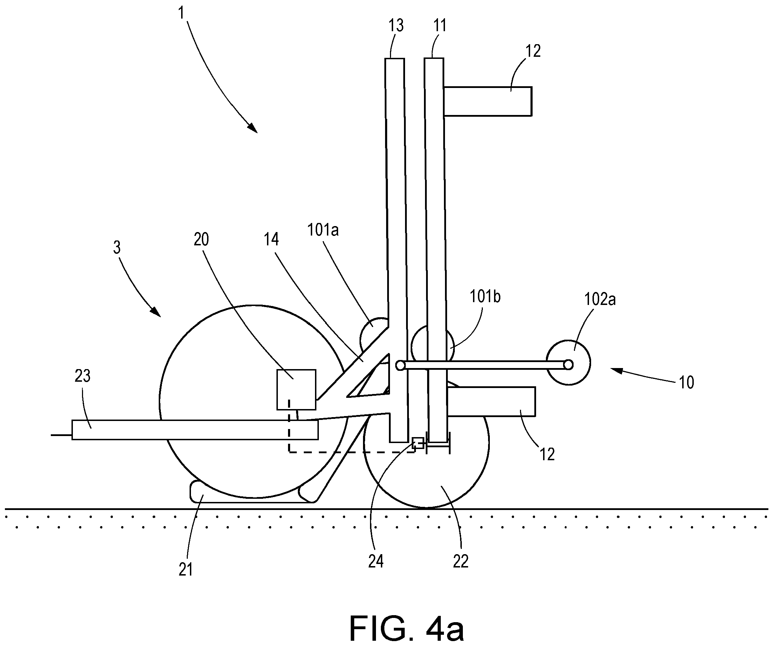

Figures 4a to 4d show an exemplary sequence of picking up a round bale 3, loading the bale 3 onto the bale support 10, receiving and guiding the bale by the first support element 101 into a position for wrapping. The tractor 2, which may be attached to the bale wrapper 1, is not shown in figures 4a to 4d.

In the example shown in figures 4a to 4d, the power transfer ring 13 is depicted as being fixed to or part of the structural frame 14 of the mobile bale wrapper 1 and thus may not be able to rotate relative to the structural frame 14. However, alternative configurations are envisaged in which the power transfer ring 13 is able to rotate, and/or rotate separately to/independently from the film dispenser holder 11.

Figure 4a shows an example of the bale wrapper 1 approaching the bale 3 with a loading arm 21 in order to lift the bale 3 from the ground. The loading arm 21 may alternatively hold the bale 3 while the bale wrapper 1 is moving, if for example a first bale is already being wrapped (not shown). In this way, the bale wrapper 1 may continue to move towards other bales 3 for wrapping, while wrapping a first bale and holding a second bale.

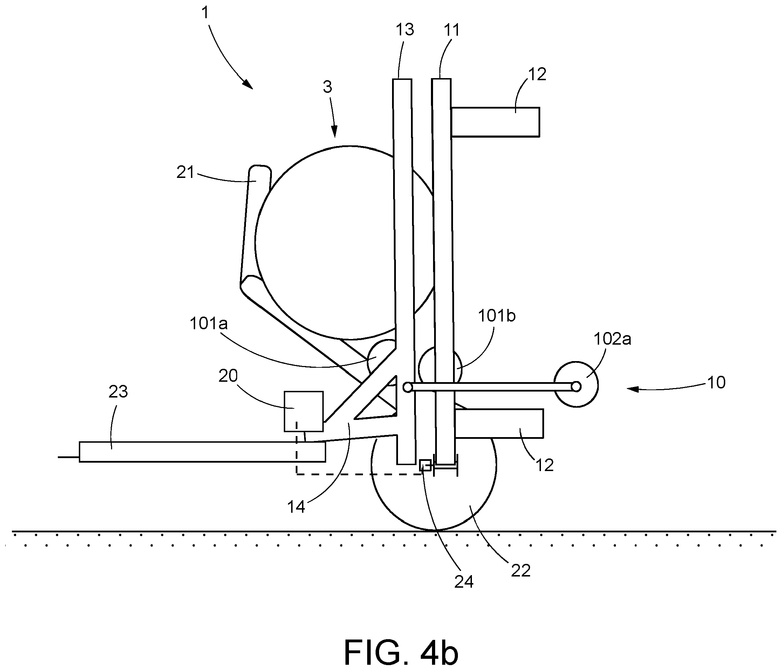

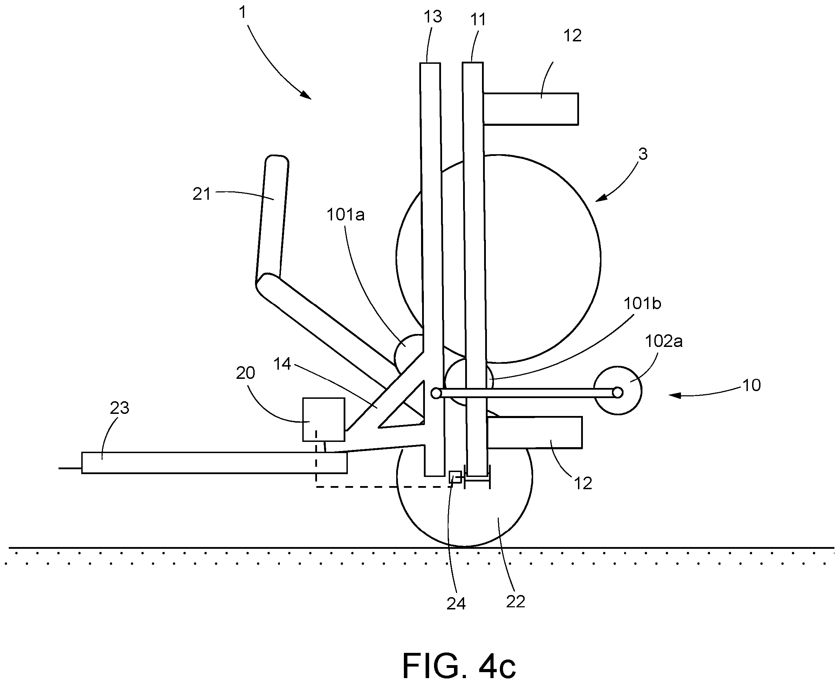

The bale wrapper 1 picks up the bale 3 from the ground with a loading arm 21, then, as shown in figure 4b, the bale 3 is transported at least partly through the rotational wrapper ring 11 and the power transfer ring 13. Between figure 4a and figure 4b, the loading arm 21 may be tilted to achieve the lifting of the bale 3. Then, when the bale support 10 is ready to receive the bale 3, the loading arm 21 may be tilted further so as to push the bale 3 or let the bale 3 move under influence of gravity towards the first and second receiving support rollers 101a, 101b and onto the bale support 10. The first and second receiving support rollers 101a, 101b are positioned so that the bale 3, when tipped by the loading arm 21, rolls smoothly from the loading arm 21 onto the rollers 101a, 101b, as shown in figure 4c, which receive and guide the bale 3 into the position for wrapping. In this way, the bale 3 may roll from the loading arm 21 onto the rollers 101a, 101b, which are positioned in tandem. The rollers 101a, 101b may then receive the bale 3 and the first support element 101 may pivot to guide the bale 3 into the wrapping position. Thereby, the bale 3 is guided smoothly into the wrapping position resulting in fewer instances of incorrect positioning of the bale 3 and/or fewer instances of the bale 3 falling out of the bale wrapper 1. Then, once in the wrapping position, the bale 3 is provided with improved stability during wrapping due to the tandem arrangement of the rollers 101a, 101b. By the rollers 101a, 101b being positioned in tandem, the bale 3 may be placed into the wrapping position, rather than rolled. The tandem arrangement of the rollers 101a, 101b may improve the receiving of the bale 3 from the loading arm 21 and then provide additional stability during wrapping. The one or more bale support rollers 101a, 101b may be positioned side-by-side and may be positioned at a distance from each other that on the one hand ensures enough space for crop residue and debris to fall through in between the bale support rollers 101a, 101b and on the other hand ensures the compact construction of the bale wrapper 1. In some examples, the bale 3 may be received by the tandem rollers 101a, 101b from the loading arm 21 and may then stay in contact with the tandem rollers 101a, 101b until wrapping of the bale 3 is complete.

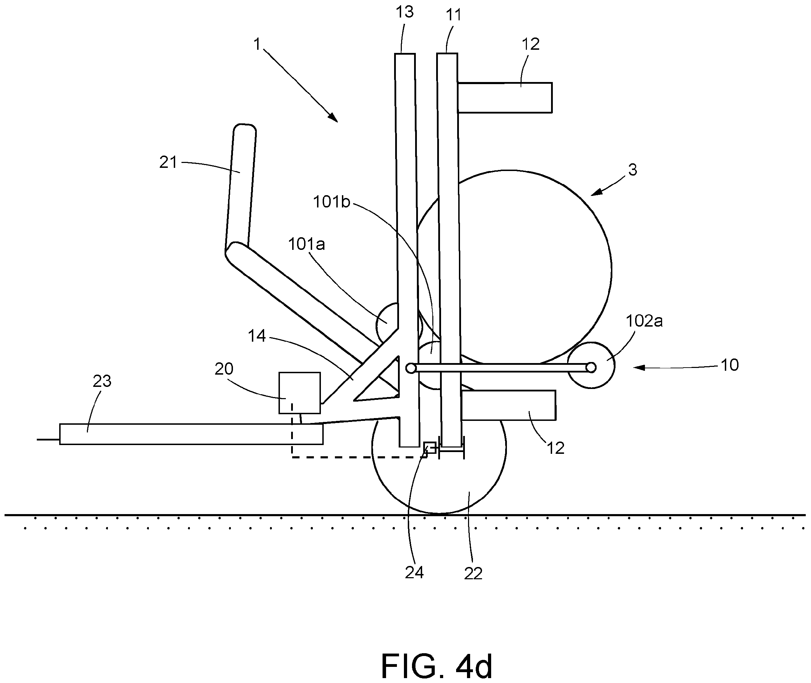

Figure 4d shows the bale 3 in the wrapping position. The wrapping position may be for example a position in which the bale 3 is supported by the first and second receiving support rollers 101a, 101b and the first unloading support roller 102a, where the film 123 may be extended around the bale 3 such that it is laid to wrap the bale 3.

The film 123 may be applied to the bale 3 as a film strip 123 and in such a manner that a portion of a first film strip edge 123a is positioned adjacent to the first bale support element 101 and simultaneously a portion of a second film strip edge 123b, which second edge 123b is opposite to the first film strip edge 123a, is positioned adjacent the second bale support element 102, as shown in figure 3. In other words, in this arrangement, the film may be applied to the bale with the film strip 123 passing between the first and second bale supports 101, 102. In other words, the space as defined by distance D1 in figure 3, between the first and second support elements 101, 102 is used when wrapping the bale 3 by applying the film strip 123 to the bale 3 through this space. In this arrangement, the film 123 wraps the bale 3 around the Y axis, with the Y-axis in an orientation inclined to the horizontal, as described above. Subsequently the stretch film strip 123 is applied to the bale 3 in an orientation inclined to the vertical.

The first support element 101 may be movable between a first position that is a bale receiving position and a second position that is a bale wrapping position. The movement may for example include a pivot movement.

Figure 4b shows an example of the first support element 101 in the bale receiving position and figure 4d shows the first support element 101 in the bale wrapping position. This movement about a pivot point, described in more detail below, provides greater support and a smoother transition of the bale 3 onto the bale support 10 for wrapping.

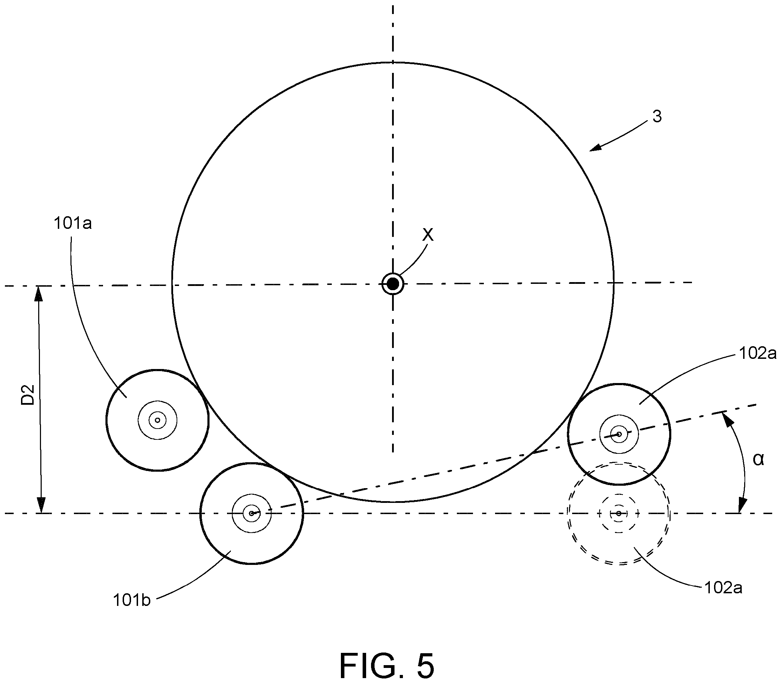

As shown in figure 5, the first unloading support roller 102a may have a height above a surface the mobile agricultural bale wrapper 1 is driving on, equal to or greater than a height of the second receiving support roller 101b above the surface, when the first support element 101 is in the bale wrapping position, and equal to or less than a height of the first axis, X. In some examples, the height may be measured from the point at which the wheel 22 contacts the ground.

In some other examples, the height may be measured relative to the plane parallel to the surface (the ground on which the bale wrapper is driving), in which the first axis, X, lies. The rotational axis of the second receiving support roller 101b may be a distance D2 from the plane and the rotational axis of the first unloading support roller 102a may be closer to the plane than the rotational axis of the second receiving support roller 101b, measured at a right angle from the plane. Relative to the rotational axis of the second receiving support roller 101b, the rotational axis of the first unloading support roller 102a may lie at an angle, α, to the plane defined by the height of the second receiving support roller 101b and parallel to the surface. In some examples, the surface may be horizontal. In other examples, the surface may be at an angle to the horizontal.

Locating the first unloading support roller 102a in this way may give the bale 3 additional support during wrapping, in particular against lateral forces experienced during wrapping which may otherwise lead to bale 3 unseating from the bale support 10.

One or more of the support rollers 101a, 101b, 102a may be driven and/or free rolling.

In some instances, for example when wrapping the bale 3, it may be beneficial to have one or more of the rollers 101a, 101b, 102a being driven to drive the rotation of the bale 3 to achieve appropriate wrapping of the bale 3. In some instances however, for example when the bale 3 is being moved into the wrapping position, it may be beneficial to have one or more of the rollers 101a, 101b, 102a be free rolling, i.e. not driven and able to rotate freely. This avoids any strain on a motor when the bale 3 influences the rotation of the one or more rollers 101a, 101b, 102a. In some instances, one or more rollers 101a, 101b, 102a may be driven while the other rollers 101a, 101b, 102a are free rolling. The driving force needed to achieve rotation of the bale 3 may be sufficiently provided by one or two rollers, meaning the remaining one or two rollers may be free-rolling to avoid additional energy expenditure. Therefore, one, a subset of, or all support rollers may be equipped with driving means to be driven and/or a one-way bearing and/or be free rolling. In some examples, the rollers 101a, 101b, 102a may be driven by a hydraulic, electric or pneumatic driving unit. In some examples, the hydraulic, electric or pneumatic drive unit may drive the rollers in one direction. The rollers 101a, 101b, 102a may however also be free to rotate (for example be passively driven by the bale 3) in the same direction. Each of the rollers 101a, 101b, 102a may be driven at a specific point in the bale 3 loading, wrapping or unloading process and free rolling at another point in the loading, wrapping or unloading process. Control of the drive of each of the rollers 101a, 101b, 102a may be done by any appropriate controller, for example controller 20.

An advantage associated with passively driven rollers is that there is no relative speed between the bale surface and the roller surface. This means that the bale surface and the bale binding (e.g. stretch film or net or twine) may have less chance of being damaged due to speed differences between the surface of the bale and surface of the rollers. To make it possible that (i) the bale support rollers may be actively driven when wrapping the bale 3, and (ii) to have the bale 3 to decide the speed of the rollers passively during bale loading and/or bale transfer, one or more of the support rollers 101a, 101b, 102a may be equipped with a one-way bearing or freewheel bearing. With such a bearing, the one or more rollers 101a, 101b, 102a may rotate faster than the active drive may enforce. This results in the principle that the bale 3 decides the speed of rotation of the rollers when the bale 3 is loaded or transferred and that the drive decides the speed of the rollers 101a, 101b, 102a (and thus the speed of the bale 3) when the bale 3 is wrapped with film 123. In some examples, the rollers 101a, 101b, 102a may be prevented from rolling in the opposite direction to the intended direction. This may benefit the motors by avoiding further strain or damage, but further may improve safety around the bale wrapper 1 by preventing the bale 3 rotating in an unintended direction, such that objects, the operator or other persons could not become trapped between the bale 3 and roller, most likely the first unloading support roller 102a.

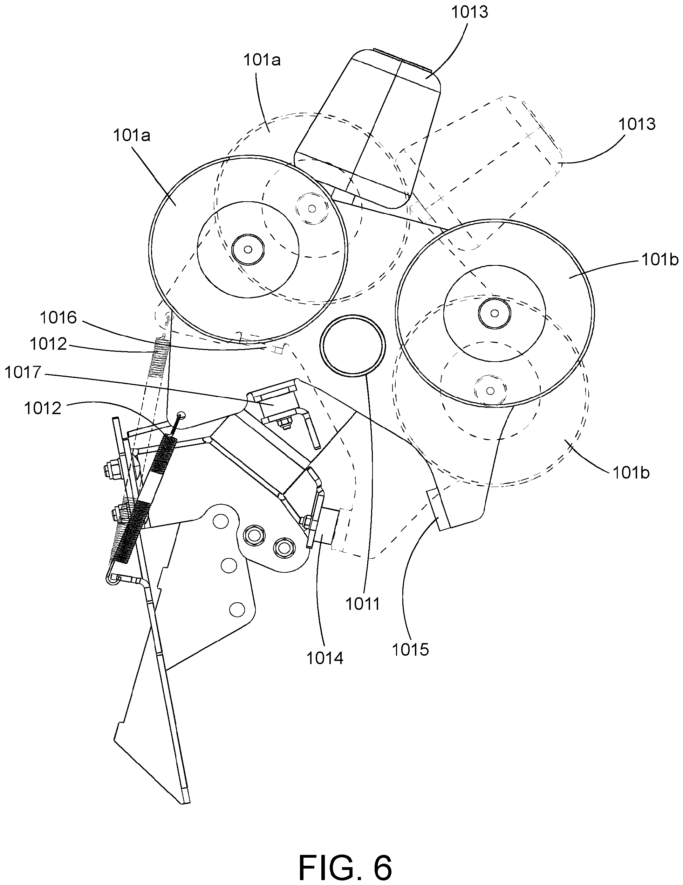

Movement between the bale receiving position and the bale wrapping position of the first support element 101 may be controlled passively by the bale 3 or actively by a hydraulic, pneumatic or electric actuator. Such an actuator may drive the first support element 101 to pivot as shown in figure 6. The angle of pivot may be from the desired position for receiving the bale 3 to the desired position for wrapping the bale 3, which may be between 15 - 45 degrees, though not limited to this range. The first support element 101 may pivot about a pivot means 1011, such as a screw, bolt, bearing or any other suitable means. In some examples, the axis about which the first support element 101 may pivot is not coaxial with the axis of either roller 101a, 101b. Control of the movement may be through direct contact or via a transmission including for example gears, chains, etc. Control of the movement may be made by any appropriate controller, for example the controller 20.

In some examples, if a round bale is not exactly cylindrical, i.e. is odd-shaped or has bumps or undulations along its cylindrical surface, the pivotability of the first support element 101 means that the bale 3 may be provided with consistent support throughout wrapping as the rollers 101a, 101b will remain in contact with the surface of the bale 3 at all times and can move to accommodate such bumps or undulations.

The mobile agricultural bale wrapper 1 may further comprise a biasing member 1012 to bias the first support element 101 towards the bale receiving position. Such a biasing member 1012 may be one or more springs or dampers, for example. Such a biasing member 1012 will have a biasing force smaller than the force exerted by the bale 3 when moving the first support element 101 between the bale receiving position to the bale wrapping position, such that the biasing member 1012 does not interfere with the smooth transition of the bale 3, but once the bale 3 is unloaded from the bale support 10, allows the first support element 101 to return to the initial position, i.e. the bale receiving position.

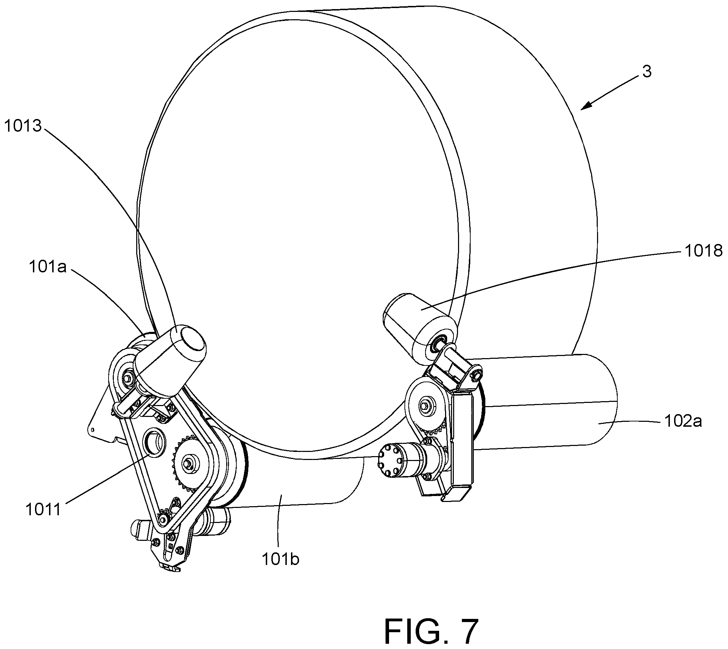

The mobile agricultural bale wrapper 1 may further comprise bale face support elements 1013. The bale face support elements 1013 may be fixed to the first support element 101 and moveable therewith. The bale face support elements 1013 may for example be located on either side of the bale 3, when supported by the first support element 101. The bale face support elements 1013 may for example be conical in shape to encourage the bale 3 towards a central location between the bale face support elements 1013. The bale face support elements 1013 may be free rolling about a central axis of the conical shape. In some examples, the second support element 102 may include unloading bale face support elements 1018, which may aid stability of wrapping and unloading of the bale 3, as shown in figure 7. In some examples, having the bale face support elements 1013 fixed to the first support element 101, and moveable therewith, means that, during loading/receiving of the bale 3 onto the bale support 10, the bale 3 may be supported by the first support element 101 and guided reliably by the bale face support elements 1013, which pivot with the first support element 101.

The first support element 101 may pivot about a pivot means 1011 and the pivot angle may be limited by suitable means 1014, 1015, 1016, 1017. In figure 6 for example, there is shown a first stopper 1014 and a first pad 1015, which define the end point for the pivot towards the bale wrapping position. This end point may be predetermined to be further than the bale wrapping position of the first support element 101, to allow some pivoting movement of the first support element 101 during wrapping of the bale 3. If a bale 3 has slight undulations in its surface, due to the nature of the agricultural crop being baled, for example, it may be beneficial for the first support element 101 to pivot during wrapping to ensure improved contact with the bale 3 and provide improved stability. Figure 6 further shows for example a second stopper 1016 and a second pad 1017, which define the end point for the pivot towards the bale receiving position.

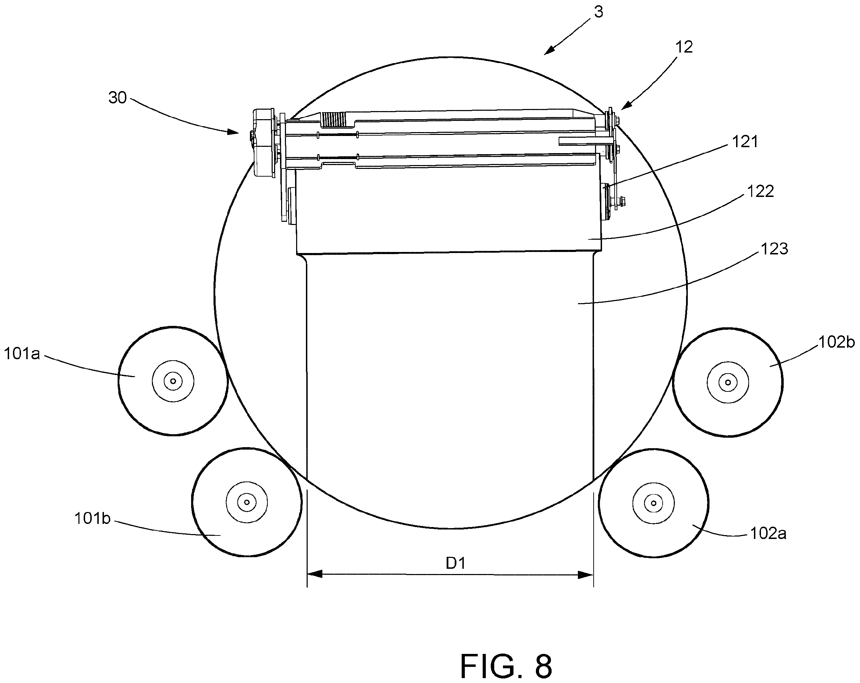

The second support element 102 may further comprise a second unloading support roller 102b positioned in tandem with the first unloading support roller 102a, as shown in figure 8. Similarly to the first support element 101 having more than one support roller 101a, 101b in tandem, the second support element 102 may also have tandem support rollers 102a, 102b. This provides a further level of stability of the bale 3 when wrapping. The tandem support rollers 101a, 101b, 102a, 102b cradle the bale 3 in a way that is much more stable than with single rollers, on either support element, and resists greater lateral forces that may otherwise unseat the bale 3. The second support element 102 may for example be fixed to or part of the structural frame 14 of the bale wrapper 1. The second support element 102 may further comprise, as in the earlier example, bale face support elements 1018. The bale face support elements 1018 may be fixed to the second support element 102 and be moveable therewith. For unloading the bale, the second support element 102 can be moved downwards. Similarly to earlier examples, the distance, D1, between the second receiving support roller 101b and the first unloading support roller 102a may be equal to or greater than a width of the pre-stretched film 123. The distance D1 may however be small enough to accommodate and stably support smaller bales 3, as mentioned above.

In a further example there is provided a mobile agricultural bale wrapper 1. The mobile agricultural bale wrapper 1 may comprise a bale support 10, comprising first and second support elements 101, 102, for supporting a bale 3 and rotating the bale 3 about a first axis, X. The mobile agricultural bale wrapper 1 may further comprise a film dispenser holder 11 for holding and rotating a film dispenser 12, the film dispenser 12 comprising a film holder 121 for holding a roll 122 of stretch film 123, to dispense the film 123 when the film dispenser 12 is rotated, the film dispenser holder 11 being configured to provide relative rotation between the bale support 10 and the film dispenser 12 about a second axis, Y, that extends substantially perpendicular to the first axis, X, so that the stretch film 123 applied to the bale 3 forms a bale wrapping that substantially completely covers the bale 3. The first support element 101 may be a receiving support element and may be located on a receiving side of the bale support 10. The first support element 101 may comprise a first receiving support roller 101a to receive and guide the bale 3 into a position for wrapping. The second support element 102 may be an unloading support element and may be located on an unloading side of the bale support 10. The second support element 102 may comprise first and second unloading support rollers 102a, 102b positioned in tandem.

Similarly to earlier examples, the film 123 may be applied to the bale 3 as a film strip 123 and in such a manner that a portion of a first film strip edge 123a is positioned adjacent to the first bale support element 101 and simultaneously a portion of a second film strip edge 123b, which second edge 123b is opposite to the first film strip edge 123a, is positioned adjacent the second bale support element 102. In other words, in this arrangement, the film 123 is applied to the bale 3 with the film strip 123 passing between the first and second bale supports 101, 102. In other words, the space between the first and second support elements 101, 102 is used when wrapping the bale 3 by applying the film strip 123 to the bale 3 through this space.

In some examples, the bale 3 may be provided with greater stability during wrapping by providing multiple rollers 102a, 102b in tandem on the second support element 102. In particular, if the mobile agricultural bale wrapper 1 is being driven on an incline, i.e. an uphill slope such that the position of the second support element 102 is lower than that of the first support element 101, when compared with their relative positions on level ground, the tandem arrangement of the rollers 102a, 102b of the second support element 102 may provide additional stability to catch the bale 3 when it is moved into the wrapping position, but also may provide additional stability during wrapping to prevent the bale 3 from becoming unseated when in the wrapping position.

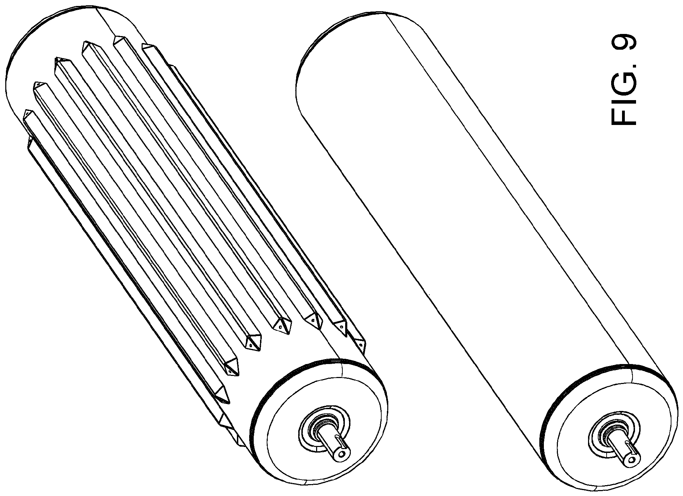

The rollers 101a, 101b, 102a, 102b may comprise a smooth surface, a friction pad such as rubber, or protrusions, as shown in figure 9, or any combination of such surface features. The rollers 101a, 101b, 102a, 102b may further comprise dots ridges or any other suitable surface feature to aid accurate handling of the bale 3. In some examples, the second support element 102 comprising first and second unloading support rollers 102a, 102b positioned in tandem may also comprise bale face support elements 1018.

In a further example there is provided a baler/bale wrapper combination 5 comprising the mobile agricultural bale wrapper 1 as described above.

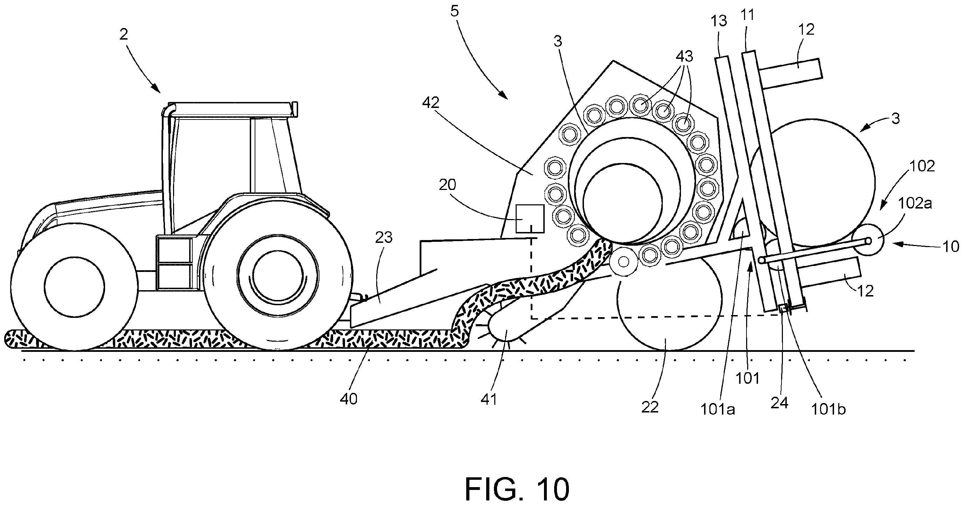

Figure 10 shows an example of a combination baler and bale wrapper 5, when connected to a tractor 2. The baler/bale wrapper combination 5 may be self-propelled or towed by a tractor 2 for driving on public roads and during operation in the field. As shown in figure 10, a line or swath 40 of cut agricultural crop may be collected by a pick-up 41 or another kind of collecting means, and transported into a bale chamber 42 for forming a bale 3 out of the collected crop. The bale 3 is subsequently wrapped and deposited in the field in the same manner as with a standalone bale wrapper.

As stated above, the baler/bale wrapper combination 5 may further comprise a bale chamber 42 inside which agricultural crops may be compressed and formed into round bales 3. The bale chamber 42 may comprise bale chamber rollers 43 for forming the bale 3. At least one of the bale chamber rollers 43 may align with the first support element 101 in a bale receiving position to provide a smooth transition of the bale 3 between the bale chamber 42 and the bale support 10.

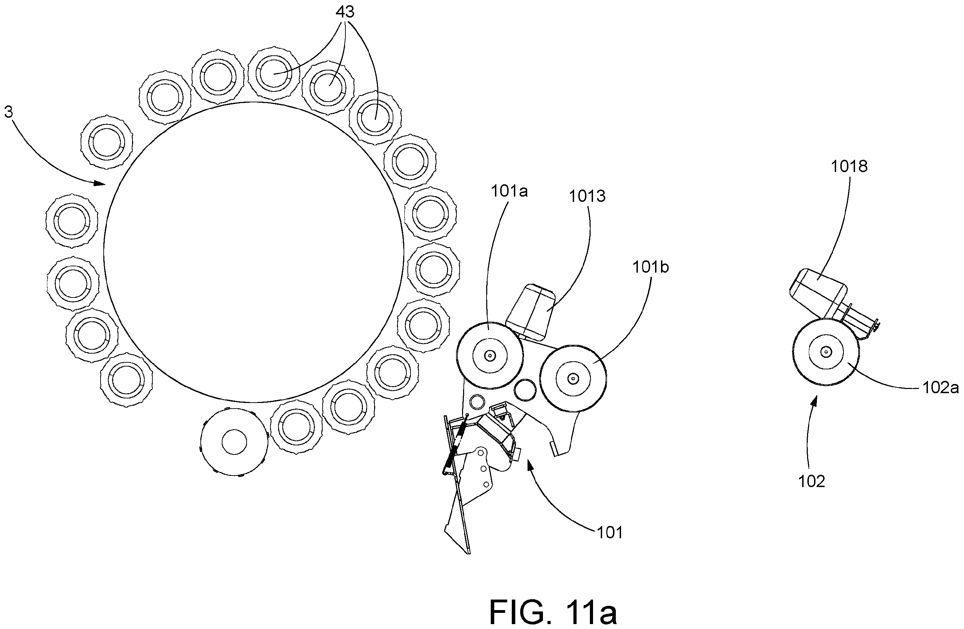

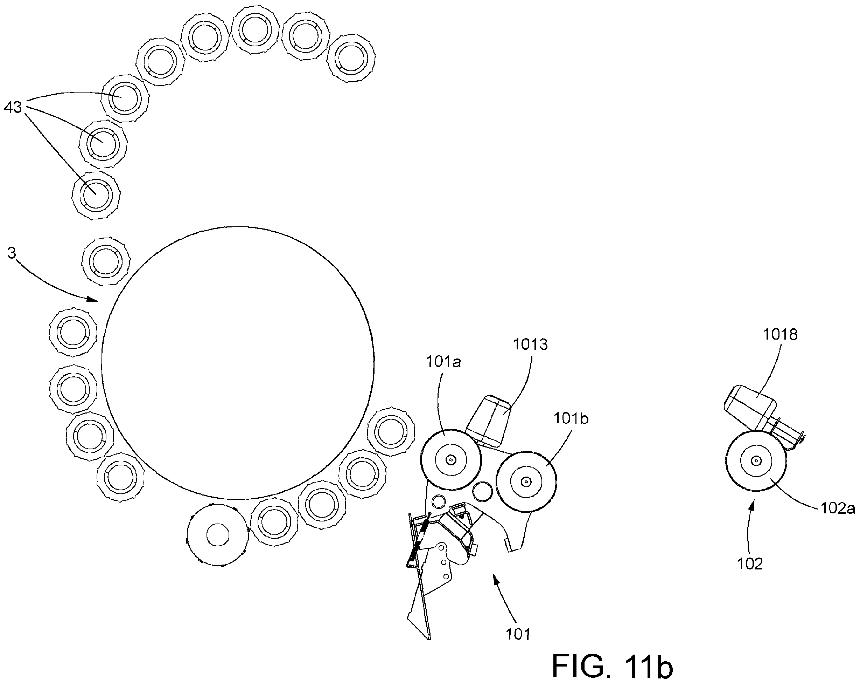

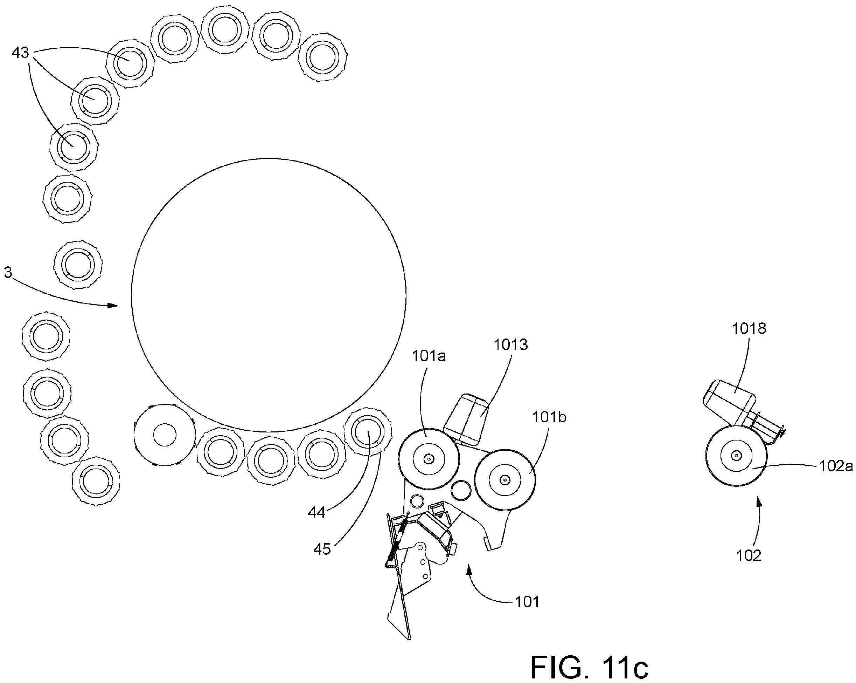

Figures 11a to 11g show an exemplary sequence of steps when moving a bale 3 from the bale chamber 42 to the bale support 10. Figure 11a shows an example in which the bale 3 is contained within the bale chamber 42 and is encompassed by bale chamber rollers 43. It should be noted that bale chambers 42 may include bands, belts, slats, chains or other means for forming the bale 3 and this merely represents one illustrative example. Figure 11b shows an example in which a section/some of the bale chamber rollers 43 are moved to allow the bale 3 to be removed from the bale chamber 42. Figure 11c shows an example in which a lower section of two or more of the bale chamber rollers 43 are moved to start unloading or ejection of the bale 3 from the bale chamber 42.

In the baler/bale wrapper combination, the bales 3 may be ejected from the bale chamber 42 in a back-over manner (generally upwardly and rearwardly direction). To achieve this, the bale chamber 42 (compression chamber which comprises a set of compression rollers 43 arranged in such a manner that a cylindrical bale chamber is formed wherein a cylindrical bale 3 is formed) is divided in three sections: a front section, a top section and a lower section. The front section is fixed to the structural main frame of the baler/bale wrapper combination. The upper section is pivotally assembled to the front section. A pivot point 44 of the lower section is located behind the bale chamber 42 and may be pivotally assembled to the structural frame of the baler/bale wrapper combination 5. The pivot point 44 of the lower section is coaxial with the axis of the compression roller 45. Compression roller 45 may be the compression roller directly adjacent the first receiving support roller 101a. When the bale 3 has reached its desired size or density and is bound with netting, film or twine, first the upper section of the bale chamber is opened. Almost immediately after starting opening the upper section, the lower section may move the bale 3 from its position in which it was formed and compressed, in a generally upwardly and rearwardly direction (movement back-over). The bale 3 is thus unloaded or ejected from the bale chamber 42 and transferred towards the bale wrapper section of the baler/bale wrapper combination.

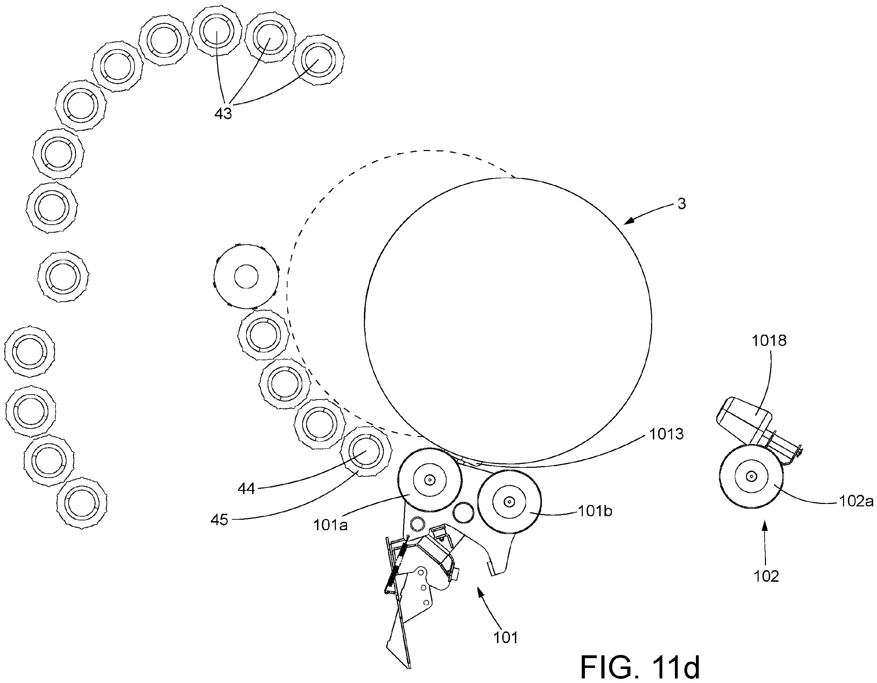

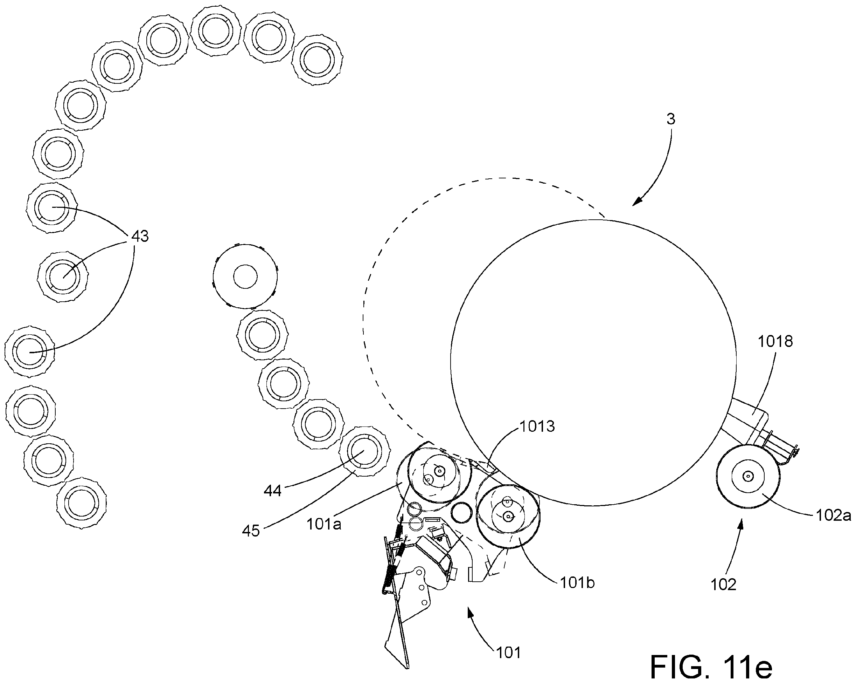

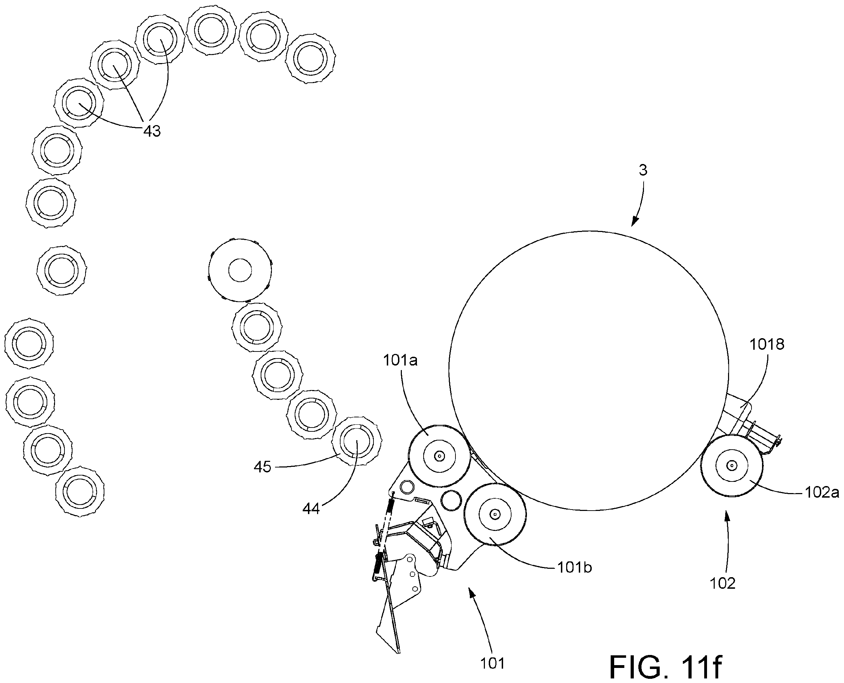

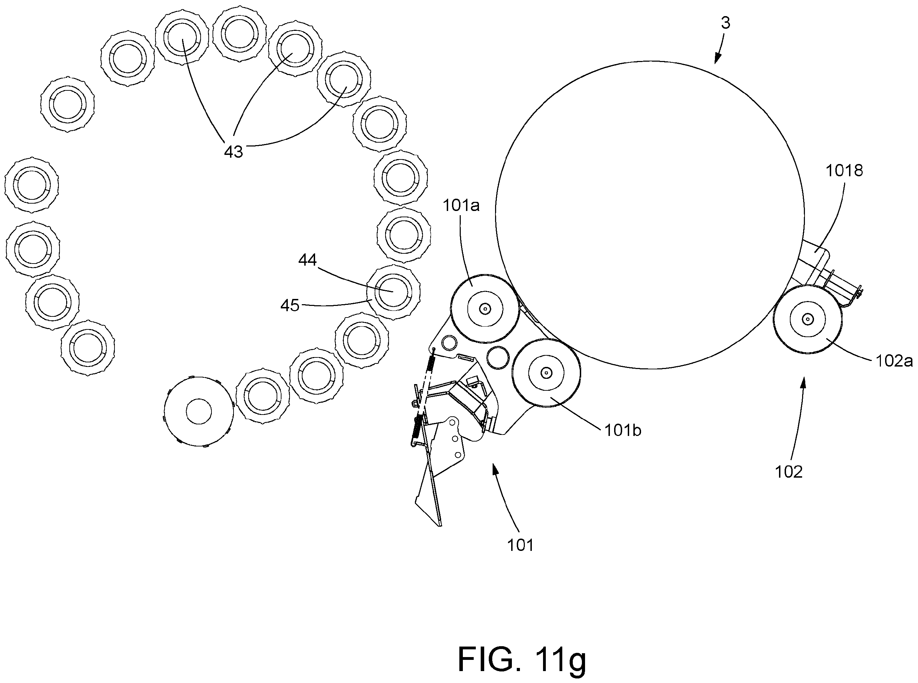

Figure 11d shows an example in which the lower section of bale chamber rollers 43 is tilted towards the bale wrapper section of the baler/bale wrapper combination 5. In this step in the process, the lower section of the bale chamber rollers 43 is aligned with the first and second receiving support rollers 101a, 101b such that the bale 3 may roll smoothly from the bale chamber 42 onto the first and second receiving support rollers 101a, 101b of the first support element 101 and be guided onto the bale support 10. Figure 11e shows an example in which the bale 3 has rolled out of the bale chamber 42 and onto the first and second receiving support rollers 101a, 101b of the first support element 101, which then pivots from the bale receiving position to the bale wrapping position, under the weight and momentum of the bale 3, and guides the bale 3 into the bale wrapping position, as shown in figure 11f. The bale chamber rollers 43 then return to their starting positions, as shown in figure 11g, ready to receive the next crop for baling.

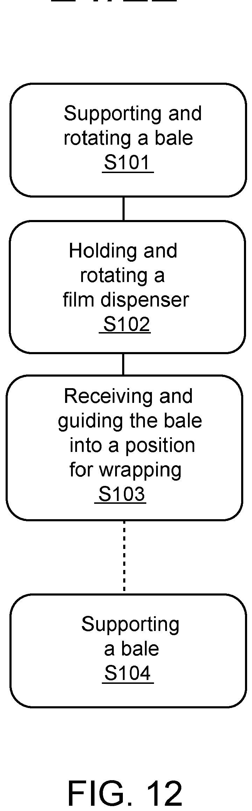

In a further example there is provided an agricultural bale wrapping method, as shown in figure 12. The agricultural bale wrapping method may comprise supporting S101 a bale 3 on a bale support 10 and rotating the bale 3 about a first axis, X. The method may further comprise holding and rotating S102 a film dispenser 12, by a film dispenser holder 11. The film dispenser 12 may comprise a film holder 121 for holding a roll 122 of stretch film 123, to dispense the film 123 when the film dispenser 12 is rotated. The film dispenser holder may be configured to provide relative rotation between the bale support 10 and the film dispenser 12 about a second axis, Y, that extends substantially perpendicular to the first axis, X, so that the stretch film 123 applied to the bale 3 forms a bale wrapping that substantially completely covers the bale 3.

The method may further comprise:
- receiving and guiding S103 the bale 3 into a position for wrapping, by a first support element 101. The first support element 101 may be a receiving support element and may be located on a receiving side of the bale support 10. The bale support 10 may comprise first and second receiving support rollers 101a, 101b, positioned in tandem; or
- receiving and guiding S103 the bale 3 into a position for wrapping, by the first support element 101, wherein the first support element 101 may be a receiving support element and may be located on a receiving side of the bale support 10. The bale support 10 may comprise a first receiving support roller 101a. The method may further comprise supporting S104 the bale, by a second support element 102, wherein the second support element 102 may be an unloading support element and may be located on an unloading side of the bale support 10. The second support element 102 may comprise first and second unloading support rollers 102a, 102b, positioned in tandem; or
- receiving and guiding S103 the bale 3 into a position for wrapping, by the first support element 101, wherein the first support element 101 may be a receiving support element and may be located on a receiving side of the bale support 10. The bale support 10 may comprise first and second receiving support rollers 101a, 101b, positioned in tandem. The method may further comprise supporting S104 the bale 3, by the second support element 102, wherein the second support element may be an unloading support element and may be located on an unloading side of the bale support 10. The second support element 102 may comprise first and second unloading support rollers 102a, 102b, positioned in tandem.

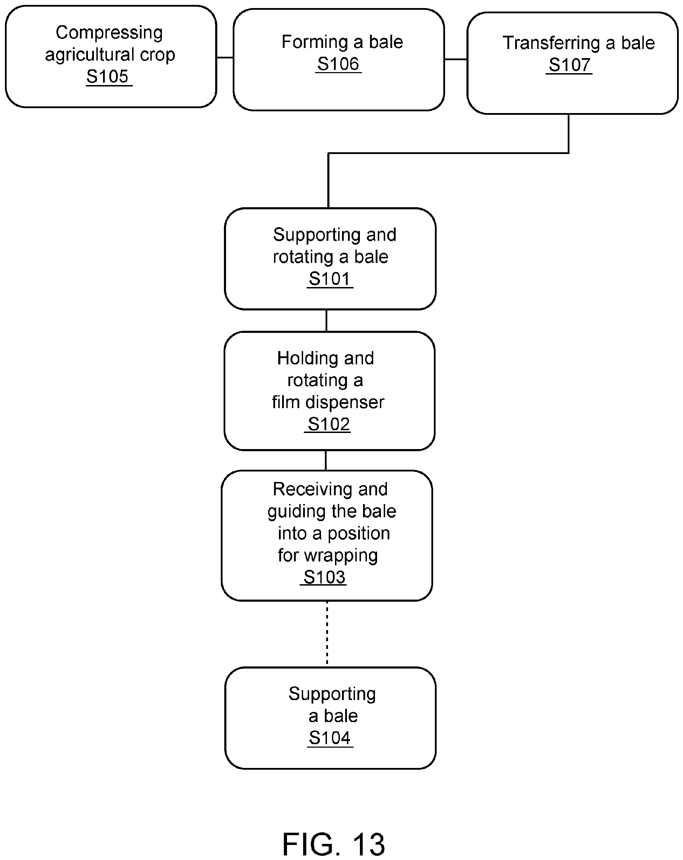

In a further example, as shown in figure 13, there is provided an agricultural baling/bale wrapping method. The method may comprise compressing S105 agricultural crop and forming S106 a bale of it in a baling chamber 42. The method may further comprise transferring S107 the bale from the baling chamber 42 to a bale support 10. The method may further comprise the agricultural bale wrapping method described above.

Various modifications of the invention are of course possible. Optionally for example the bale wrapper 1 can be used in a stationary/non-mobile set up where bales 3 are brought to the bale wrapper 1. The subject matter defined in each of the claims may be combinable with that of any other claim. Similarly, examples and embodiments described above are for illustrative purposes only and features of one example may be combinable with those of other examples, as will be clear to the skilled person.

### Statements of Invention:

1. A mobile agricultural bale wrapper comprising:
   a bale support, comprising first and second support elements, for supporting a bale and rotating the bale about a first axis; and
   a film dispenser holder for holding and rotating a film dispenser, the film dispenser comprising a film holder for holding a roll of stretch film, to dispense the film when the film dispenser is rotated, the film dispenser holder being configured to provide relative rotation between the bale support and the film dispenser about a second axis that extends substantially perpendicular to the first axis so that the stretch film applied to the bale forms a bale wrapping that substantially completely covers the bale; wherein
   the first support element is a receiving support element, located on a receiving side of the bale support, and comprises first and second receiving support rollers positioned in tandem to receive and guide the bale into a position for wrapping, and the second support element is an unloading support element, located on an unloading side of the bale support, and comprises at least one first unloading support roller.
2. The mobile agricultural bale wrapper of statement 1, wherein the film is applied to the bale as a film strip and in such a manner that a portion of a first film strip edge is positioned adjacent to the first bale support element and simultaneously a portion of a second film strip edge, which second edge is opposite to the first film strip edge, is positioned adjacent the second bale support element.
3. The mobile agricultural bale wrapper of statement 1 or statement 2, wherein the first support element is movable between a first position that is a bale receiving position and a second position that is a bale wrapping position.
4. The mobile agricultural bale wrapper of any preceding statement, further comprising:
   at least one film pre-stretcher configured to pre-stretch the film by an elongation amount and apply the pre-stretched film to the bale, wherein
   the distance between the second receiving support roller and the first unloading support roller is equal to or greater than a width of the pre-stretched film.
5. The mobile agricultural bale wrapper of any of statement 2, 3 or 4, wherein the first unloading support roller has a height above a surface the mobile agricultural bale wrapper is driving on, equal to or greater than a height of the second receiving support roller above the surface, when the first support element is in the bale wrapping position, and equal to or less than a height of the first axis.
6. The mobile agricultural bale wrapper of any preceding statement, wherein one or more of the support rollers is driven and/or free rolling.
7. The mobile agricultural bale wrapper of any preceding statement, wherein one or more of the support rollers is equipped with a one-way bearing or freewheel bearing.
8. The mobile agricultural bale wrapper of any of statements 3 to 7, wherein movement between the bale receiving position and the bale wrapping position of the first support element is controlled passively by the bale or actively by a hydraulic, pneumatic or electric actuator.
9. The mobile agricultural bale wrapper of any of statements 3 to 8, further comprising:
   a biasing member to bias the first support element towards the bale receiving position.
10. The mobile agricultural bale wrapper of any preceding statement, further comprising:
   bale face support elements, wherein the bale face support elements are fixed to the first support element and moveable therewith.
11. The mobile agricultural bale wrapper of any preceding statement, wherein
   the second support element further comprises a second unloading support roller positioned in tandem with the first unloading support roller.
12. A mobile agricultural bale wrapper comprising:
   a bale support, comprising first and second support elements, for supporting a bale and rotating the bale about a first axis; and
   a film dispenser holder for holding and rotating a film dispenser, the film dispenser comprising a film holder for holding a roll of stretch film, to dispense the film when the film dispenser is rotated, the film dispenser holder being configured to provide relative rotation between the bale support and the film dispenser about a second axis that extends substantially perpendicular to the first axis so that the stretch film applied to the bale forms a bale wrapping that substantially completely covers the bale; wherein
   the first support element is a receiving support element, located on a receiving side of the bale support, and comprises a first receiving support roller to receive and guide the bale into a position for wrapping, and the second support element is an unloading support element, located on an unloading side of the bale support, and comprises first and second unloading support rollers positioned in tandem.
13. A baler/bale wrapper combination comprising the mobile agricultural bale wrapper of any preceding statement.
14. A baler/bale wrapper combination of statement 13, further comprising:
   a bale chamber inside which agricultural crops are compressed and formed to round bales, the bale chamber comprising bale chamber rollers for forming the bale; wherein
   at least one of the bale chamber rollers aligns with the first support element in a bale receiving position to provide a smooth transition of the bale between the bale chamber and the bale support.
15. An agricultural bale wrapping method comprising:
   supporting a bale on a bale support and rotating the bale about a first axis;
   holding and rotating a film dispenser, by a film dispenser holder, the film dispenser comprising a film holder for holding a roll of stretch film, to dispense the film when the film dispenser is rotated, the film dispenser holder being configured to provide relative rotation between the bale support and the film dispenser about a second axis that extends substantially perpendicular to the first axis so that the stretch film applied to the bale forms a bale wrapping that substantially completely covers the bale; and
   receiving and guiding the bale into a position for wrapping, by a first support element, wherein the first support element is a receiving support element, located on a receiving side of the bale support, and comprises first and second receiving support rollers positioned in tandem; or
   receiving and guiding the bale into a position for wrapping, by the first support element, wherein the first support element is a receiving support element, located on a receiving side of the bale support, and comprises a first receiving support roller, and supporting the bale, by a second support element, wherein the second support element is an unloading support element, located on an unloading side of the bale support and comprises first and second unloading support rollers, positioned in tandem; or
   receiving and guiding the bale into a position for wrapping, by the first support element, wherein the first support element is a receiving support element, located on a receiving side of the bale support, and comprises first and second receiving support rollers positioned in tandem, and supporting the bale, by the second support element, wherein the second support element is an unloading support element, located on an unloading side of the bale support and comprises first and second unloading support rollers, positioned in tandem .
16. An agricultural baling/bale wrapping method, comprising:
   compressing agricultural crop and forming a bale of it in a baling chamber; and
   transferring the bale from the baling chamber to a bale support; and further comprising the method of statement 15.

## Claims

1. A mobile agricultural bale wrapper comprising:
a bale support, comprising first and second support elements, for supporting a bale and rotating the bale about a first axis; and
a film dispenser holder for holding and rotating a film dispenser, the film dispenser comprising a film holder for holding a roll of stretch film, to dispense the film when the film dispenser is rotated, the film dispenser holder being configured to provide relative rotation between the bale support and the film dispenser about a second axis that extends substantially perpendicular to the first axis so that the stretch film applied to the bale forms a bale wrapping that substantially completely covers the bale; wherein
the film is applied to the bale as a film strip and in such a manner that a portion of a first film strip edge is positioned adjacent to the first bale support element and simultaneously a portion of a second film strip edge, which second edge is opposite to the first film strip edge, is positioned adjacent the second bale support element;
the first support element is a receiving support element, located on a receiving side of the bale support, and comprises first and second receiving support rollers positioned in tandem to receive and guide the bale into a position for wrapping, and the second support element is an unloading support element, located on an unloading side of the bale support, and comprises at least one first unloading support roller; and
both the first and second receiving support rollers provide support to the bale during the wrapping of the bale.

2. The mobile agricultural bale wrapper of claim 1, wherein the first support element is movable between a first position that is a bale receiving position and a second position that is a bale wrapping position.

3. The mobile agricultural bale wrapper of claim 1 or claim 2, further comprising:
at least one film pre-stretcher configured to pre-stretch the film by an elongation amount and apply the pre-stretched film to the bale, wherein
the distance between the second receiving support roller and the first unloading support roller is equal to or greater than a width of the pre-stretched film.

4. The mobile agricultural bale wrapper of claim 2 or claim 3, wherein the first unloading support roller has a height above a surface the mobile agricultural bale wrapper is driving on, equal to or greater than a height of the second receiving support roller above the surface, when the first support element is in the bale wrapping position, and equal to or less than a height of the first axis.

5. The mobile agricultural bale wrapper of any preceding claim, wherein one or more of the support rollers is driven and/or free rolling.

6. The mobile agricultural bale wrapper of any preceding claim, wherein one or more of the support rollers is equipped with a one-way bearing or freewheel bearing.

7. The mobile agricultural bale wrapper of claim 2 or claims 3 to 6, when depending on claim 2, wherein movement between the bale receiving position and the bale wrapping position of the first support element is controlled passively by the bale or actively by a hydraulic, pneumatic or electric actuator.

8. The mobile agricultural bale wrapper of claim 2 or claims 3 to 7, when depending on claim 2, further comprising:
a biasing member to bias the first support element towards the bale receiving position.

9. The mobile agricultural bale wrapper of any preceding claim, further comprising:
bale face support elements, wherein the bale face support elements are fixed to the first support element and moveable therewith.

10. The mobile agricultural bale wrapper of any preceding claim, wherein
the second support element further comprises a second unloading support roller positioned in tandem with the first unloading support roller.

11. A mobile agricultural bale wrapper comprising:
a bale support, comprising first and second support elements, for supporting a bale and rotating the bale about a first axis; and
a film dispenser holder for holding and rotating a film dispenser, the film dispenser comprising a film holder for holding a roll of stretch film, to dispense the film when the film dispenser is rotated, the film dispenser holder being configured to provide relative rotation between the bale support and the film dispenser about a second axis that extends substantially perpendicular to the first axis so that the stretch film applied to the bale forms a bale wrapping that substantially completely covers the bale; wherein
the film is applied to the bale as a film strip and in such a manner that a portion of a first film strip edge is positioned adjacent to the first bale support element and simultaneously a portion of a second film strip edge, which second edge is opposite to the first film strip edge, is positioned adjacent the second bale support element;
the first support element is a receiving support element, located on a receiving side of the bale support, and comprises a first receiving support roller to receive and guide the bale into a position for wrapping, and the second support element is an unloading support element, located on an unloading side of the bale support, and comprises first and second unloading support rollers positioned in tandem; and
both the first and second unloading support rollers provide support to the bale during the wrapping of the bale.

12. A baler/bale wrapper combination comprising the mobile agricultural bale wrapper of any preceding claim.

13. A baler/bale wrapper combination of claim 12, further comprising:
a bale chamber inside which agricultural crops are compressed and formed to round bales, the bale chamber comprising bale chamber rollers for forming the bale; wherein
at least one of the bale chamber rollers aligns with the first support element in a bale receiving position to provide a smooth transition of the bale between the bale chamber and the bale support.

14. An agricultural bale wrapping method comprising:
supporting a bale on a bale support and rotating the bale about a first axis;
holding and rotating a film dispenser, by a film dispenser holder, the film dispenser comprising a film holder for holding a roll of stretch film, to dispense the film when the film dispenser is rotated, the film dispenser holder being configured to provide relative rotation between the bale support and the film dispenser about a second axis that extends substantially perpendicular to the first axis so that the stretch film applied to the bale forms a bale wrapping that substantially completely covers the bale;
applying the film to the bale as a film strip and in such a manner that a portion of a first film strip edge is positioned adjacent to the first bale support element and simultaneously a portion of a second film strip edge, which second edge is opposite to the first film strip edge, is positioned adjacent the second bale support element; and
receiving and guiding the bale into a position for wrapping, by a first support element, wherein the first support element is a receiving support element, located on a receiving side of the bale support, and comprises first and second receiving support rollers positioned in tandem, wherein both the first and second receiving support rollers provide support to the bale during the wrapping of the bale; or
receiving and guiding the bale into a position for wrapping, by the first support element, wherein the first support element is a receiving support element, located on a receiving side of the bale support, and comprises a first receiving support roller, and supporting the bale, by a second support element, wherein the second support element is an unloading support element, located on an unloading side of the bale support and comprises first and second unloading support rollers, positioned in tandem wherein both the first and second unloading support rollers provide support to the bale during the wrapping of the bale; or
receiving and guiding the bale into a position for wrapping, by the first support element, wherein the first support element is a receiving support element, located on a receiving side of the bale support, and comprises first and second receiving support rollers positioned in tandem, and supporting the bale, by the second support element, wherein the second support element is an unloading support element, located on an unloading side of the bale support and comprises first and second unloading support rollers, positioned in tandem, wherein the first and second receiving support rollers and the first and second unloading support rollers provide support to the bale during the wrapping of the bale.

15. An agricultural baling/bale wrapping method, comprising:
compressing agricultural crop and forming a bale of it in a baling chamber; and
transferring the bale from the baling chamber to a bale support; and further comprising the method of claim 14.
